# EUROPEAN PATENT SPECIFICATION

(11) **EP 3 384 692 B1**
(45) Date of publication and mention of the grant of the patent: **26.06.2019**
(21) Application number: 16797580.4
(22) Date of filing: 17.11.2016
(51) Int. Cl.: H04W 12/06, H04W 4/02, H04W 48/16, H04W 84/12, H04W 48/20

(54) **MOBILE DEVICE CONTROL OF WIFI HOTSPOT ACCESS**
MOBILVORRICHTUNGSSTEUERUNG EINES WIFI-HOTSPOT-ZUGANGS
COMMANDE D'ACCÈS À UN POINT D'ACCÈS PUBLIC WI-FI, PAR UN DISPOSITIF MOBILE

(30) Priority: 03.12.2015 EP 15197881
(43) Date of publication of application: 10.10.2018
(73) Proprietor: Accuris Technologies Limited, Dublin 2 (IE)
(72) Inventor: SMITH, Ian, Dunleer County Louth (IE); COOKE, Liam, Dublin 13 (IE)
(74) Representative: Weldon, Michael James
(86) International application number: PCT/EP2016/078035
(87) International publication number: WO 2017/093039

(56) References cited:
- WO-A2-2006/014439
- US-A1- 2011 013 569
- US-A1- 2013 007 853

## Description

### Field of the Invention

The invention relates to access by mobile devices to WiFi hotspot local area networks.

### Prior Art Discussion

In general, access by a mobile device to a hotspot involves the device's operating system (OS) determining a list of possibilities. The user selects one, and inputs any access credentials required. This is laborious and time-consuming, and requires the user to initially determine the access credentials and/or deal with a lengthy login procedure.

WO2015/154454 (ZTE Corp) describes a wireless network connection method in which an available SSID list is scanned by a terminal.

US2013/007853 (Gupta) describes methods for automatic connection of mobile devices to a WiFi Hotspot, with use of a subscription data object.

The invention is directed towards providing for access by mobile devices to hotspots in a manner which is automatic.

### Summary of the Invention

According to the invention, there is provided a method as set out in claim 1.

In one embodiment, each file has an associated tag, and if the file contents change the tag is changed.

In one embodiment, the tag is a hash over the associated file content. Preferably, the device processor automatically determines file changes by comparing tags stored locally and tags on the server.

In one embodiment, the device processor scans currently available hotspot SSIDs and compares them to SSIDs in the files available on the server.

In one embodiment, each SSID file represents a set of SSIDs, and includes a tag, a file type, and a list of variables.

In one embodiment, the variables include authentication type, and/or password, and/or routing prefix, and/or hotspot category, and/or user agent.

In one embodiment, the SSID files are generated on the server by a publishing process at a regular basis.

In one embodiment, SSIDs are partitioned using geohashes, the server publishing an SSID file which contains only partner SSIDs which are known to the device, and a set of files under a directory indexed by geohash).

In one embodiment, said publishing comprises the steps performed by the server of:
generating a geohash, in which unused bits are represented by a digit,
compiling data within bounds of the geohash, including hotspots of interest to the region identified by the geohash and SSIDs of interest,
   if the data is too big, break it into smaller areas with longer geohashes,
writing the data to a file using the geohash as the name, and
   calculate a tag of the file based on a hash of its contents.

In one embodiment, the device processor associates the current location by searching a list of known geohashes for the determined geohash using a query, and:
if not found, shortening the query by removing one or more last characters and repeating the search, and
if a match is found then the matching geohash contains the area, and the processor retrieves the SSID file matching that geohash.

In one embodiment, the device processor periodically checks a tag with tags of a master list on the server, and if it detects a change it determines that a new publish has been performed and so potentially a distribution of geohashes has changed, and it checks for new geohashes and stores them locally.

In one embodiment, the device processor removes geohashes and any associated files if said files have changed.

In one embodiment, the device processor automatically generates a list of hotspots for the current location.

In one embodiment, the hotspots are determined from a file downloaded from the server.

In one embodiment, the device processor:
stores a list of names of hotspot files, each file having hotspot data including location,
automatically determines current location,
associates the current location with a hotspot file name or names, and requests the server to download the hotspot file for said name or names.

In one embodiment, the device processor calculates a geohash for the current location, in which the location is identified by a geohash with a chosen level of granularity to set the area size, and wherein:
each hotspot file has an associated tag, and if the file contents change the tag is changed,
the tag is a hash over the associated hotspot file content, and the device automatically determines hotspot file changes by comparing tags stored locally and tags on the server.

In one embodiment, the device processor reads said location information in the hotspot file and uses it to generate a display for a user indicating geographical location of a hotspot and user-readable information concerning the hotspot.

In one embodiment, at least one SSID file has a structure with attributes linking a parent file to a handling object and to a routing object, in which the handling object includes radio-level parameters including credentials for use by the device software to associate to a hotspot, and the routing object includes authentication server-level captive portal parameters including priority parameters including time duration for access and allocated bandwidth.

In one embodiment, said routing object is linked in a chain to a region object, in turn linked to a polygon object defining the region in terms of latitude and longitude geographical points.

In one embodiment, the software client applies an order to a plurality of potential access credentials and attempts access in that order.

In one embodiment, said access credentials are derived from different SSIDs in a single SSID file or multiple SSID files.

In another aspect, the invention provides a client device comprising a processor and a radiation communication interface, in which the processor is configured to perform the device steps of a method of any embodiment.

In a further aspect, the invention provides a computer readable medium comprising non-transitory software for performing the steps of a method of any embodiment when executed by a digital processor.

### Additional Statements

According to the invention, there is provided a method performed by a mobile device, the method comprising steps of:
storing a list of names of SSID files, each file having hotspot SSIDs and associated access credentials,
automatically determining current location,
associating the current location with a file name or names,
requesting the server to download the file for said name or names, and
using access credentials from said file for automatically logging in to a relevant hotspot.

In one embodiment, the device calculates a geohash for the current location. In one embodiment, the location is identified by a geohash with a chosen level of granularity to set the area size. In one embodiment, each file has an associated tag, and if the file contents change the tag is changed. In one embodiment, the tag is a hash over the associated file content.

In one embodiment, the client automatically determines file changes by comparing tags stored locally and tags on the server. In one embodiment, the device operating system scans currently available hotspot SSIDs and compares them to SSIDs in the files available on the server.

In one embodiment, each SSID file represents a set of SSIDs, and includes a tag, a file type, and a list of variables. In one embodiment, the variables include authentication type, and/or password, and/or routing prefix, and/or hotspot category, and/or user agent, and WIST data.

In one embodiment, the SSID files are generated on the server by a publishing process at a regular basis. In one embodiment, the client periodically checks a tag with those of a master list on the server, and if it detects a change it determines that a new publish has been performed and so potentially the distribution of geohashes has changed. At that point, it checks for new geohashes and stores them locally.

In one embodiment, the client removes geohashes and any associated files if said files have changed. In one embodiment, the client automatically generates a list of hotspots for the current location. In one embodiment, the hotspots are determined from a file downloaded from the server.

In one embodiment, the client:
stores a list of names of hotspot files, each file having hotspot data including location,
automatically determines current location,
associates the current location with a hotspot file name or names, and requests the server to download the hotspot file for said name or names.

In one embodiment, the device calculates a geohash for the current location, in which the location is identified by a geohash with a chosen level of granularity to set the area size.

In one embodiment, each hotspot file has an associated tag, and if the file contents change the tag is changed. In one embodiment, the tag is a hash over the associated hotspot file content.

In one embodiment, the client automatically determines hotspot file changes by comparing tags stored locally and tags on the server.

In another aspect, the invention provides a client device comprising a processor and a radiation communication interface, in which the processor is configured to perform the steps of a method as defined in any embodiment. The invention also provides in another aspect an apparatus comprising a server and a device of any embodiment.

In a further aspect, the invention provides a computer readable medium comprising non-transitory software for performing the steps of a method as defined in any embodiment when executed by a digital processor.

### DETAILED DESCRIPTION OF THE INVENTION

### Brief Description of the Invention

The invention will be more clearly understood from the following description of some embodiments thereof, given by way of example only with reference to the accompanying drawings in which:-
Figs. 1 and 2 are diagrammatic representations of geohashes,
Fig. 3 is a flow diagram illustrating operation of a client of a mobile device; and
Fig. 4 is a relationship diagram for an alternative SSID file structure.

### Description of the Embodiments

### Overview

The invention provides a mobile device having a software application client which executes on a digital processor of the device for communication with a remote server and with local routers for hotspot access. The invention also provides a server for communicating with the mobile device.

The device client and the server are configured to ensure that the device automatically logs in to an appropriate hotspot for the current location, without need for the user to select a hotspot and to input access credentials. The hotspots for the device are all hotspots which are covered by a service contract for the device.

The software client operates in a manner which achieves such automatic access without need to store excessive data locally on the device, and without excessive client-server communication.

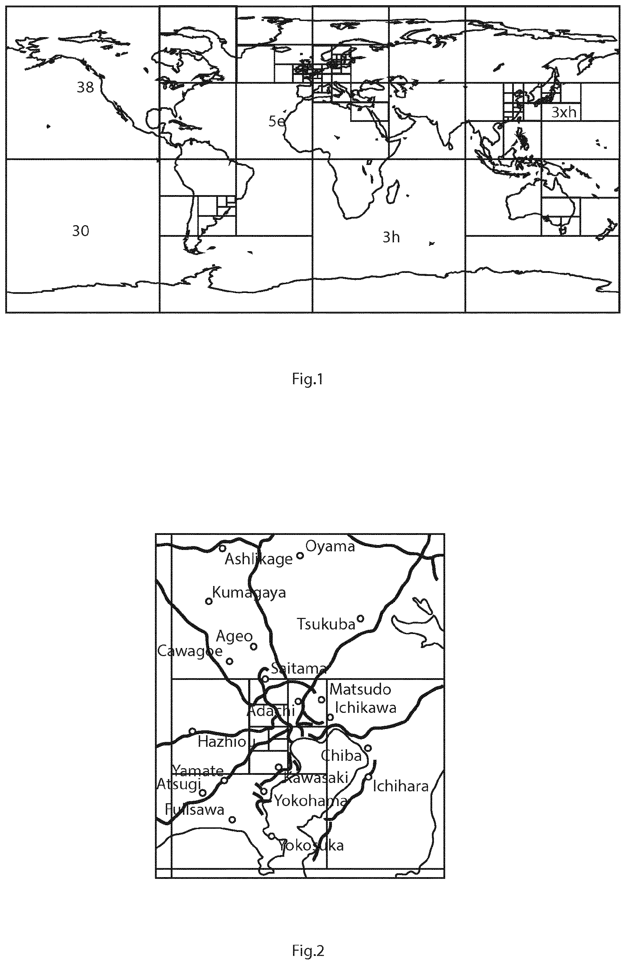

Referring to Figs. 1 and 2, hotspots are grouped into boxes which contain a maximum of about 1000 hotspots. A box covers a rectangular area on the world map (rectangular because the world map is abstracted to a 360° wide, 180° high rectangle). Areas with small numbers of hotspots are covered by very large squares. Areas with very dense hotspot populations will be covered by many small boxes.

For a hotspot list of 53,000 entries and a limit of 1,000 hotspots per box, the data is partitioned into approximately 200 boxes as shown in Fig. 1. Each box is identified by a geohash.

Fig. 2 shows how boxes are arranged over Tokyo, which has a high density of hotpots.

Boxes have an upper limit on the number of hotspots they can hold. So, as hotspots are added to an area, the box may split into two or more smaller boxes. The number of boxes and the geohashes within each box will change over time. Boxes may also be empty e.g. over the ocean.

The software of the device client stores a list of names of Service Set Identifier ("SSID") files, each file having hotspot SSIDs and associated access credentials. The client automatically determines current location of the device, and automatically associates the current location with an SSID file name or names. It then requests the server to download the file for the name or names, and then uses access credentials from the file for automatically logs in to a relevant hotspot.

The granularity of the location is denoted by the filename length and that a longer filename means a tighter granularity. The geohash is used to determine which of the known geohash files contain the SSIDs in the surrounding area, as follows.
(a) Determine the location required.
(b) Determine a geographic area around the location using, for example, a configured distance such as 10km north-west of the location to 10km south-east of the location. Now this area is either part of a larger area covered by a known geohash, or it encompasses a number of smaller areas, each known by their own geohashes.
(c) Convert area to a geohash string.
(d) Search the list of known geohashes for the string. If not found, shorten the query by removing the last character and repeat the search.
(e) If a match is found then the matching geohash contains the area, and the processor retrieves the SSID file matching that geohash. The file is a list of SSIDs.
(f) If no match was found, the hash must be a superset of a number of hashes known to the database, so the processor queries the database for all known hashes which start with the characters of the area geohash and retrieves all files which match, thereby retrieving a set of files, each one being a list of SSIDs

### SSID Files and Publication

The client software requests SSID files from the server, and upon download the device can generate a display of a list of hotspots for the area within which the device is located, or any area to be displayed on a map.

The downloaded SSID files are stored in the client's database. If the client already has all of the files in its database, no communication is required with the server..

The client software then calculates a current location geohash, and uses this to associate the current location with a particular file of SSIDs.

It is not just hotspot data that can change. As WISPs and hotspots are added to the server system, the following data entities can change:
(a) seed hotspot list
(b) countries
(c) cities (city details for each country)
(d) seed cities (cities for hotspots in seed hotspot list)
(e) SSIDs
(f) venue types
(g) boxes (hundreds, maybe thousands of these)

As hotspots are added, boxes will change. A box may split into two or more smaller boxes.

A publisher process on the server builds hotspot ("HS") files for all of the above entities. The publisher may be run nightly or whenever significant changes have been made to the hotspot data. Each HS file is associated with one or more SSID files. It contains data sufficient for the device client to generate a display on the device with a map of the location and user-understandable information such as hotspot name. A hotspot file is therefore distinct from an SSID file, in that the HS file is for user information such as display maps with location pins, whereas the SSID files provide information for the software to perform automatic actions such as automatically signing in to a hotspot.

As the publisher prepares all the data files, it adds the details of each file to a masterlist file. The masterlist contains a list of all the data files available for download by the client and their respective ETags, The ETag is a hash of the file. If a HS file changes, its ETag changes. Therefore, the server master list of HS files changes. The client recognises from its communication with the server that the master HS file list has changed, and requests:
the updated list, and
re-download of those files which it has previously cached.

By downloading the master list, the client can know when an entity has changed. This allows the client to download only those files it needs and to avoid downloading unmodified files it already has cached.

All the data prepared by the publisher for download is static and can be served by a static-only lightweight webserver.

The same publish mechanism (static file downloadable over HTTP), the same versioning mechanism (ETags) and the same data format (csv with headers) is used for all published data so that the client should be able to use a single interface to manage all published data.

All IDs are the same on the server and the client. For example, Country id 33 will refer to the same country on both server and client.

In more detail, the user installs the client and performs a registration with the service provided by the server. Part of that registration involves the client downloading and storing a master list file which contains a list of SSID files and their ETags (essentially their version number). Each SSID file represents a set of SSIDs, or hotspot provider names and identifiers. After travelling, the client calculates a geohash for an arbitrary area (say 10km) around the current location and uses it to match the list of geohashes it knows the server has. The client requests SSID and HS files associated with the geohash of the area it is interested in. The client caches the SSID and HS files into its own database and loads concerned SSIDs into the device operating system ("OS").

The client periodically checks the 'ETag' of the master list. If it changes then it means that a new publish has been done and potentially the distribution of geohashes has changed. At that point, it checks for new geohashes and adds them locally. These are only strings, not all of the SSID data associated with the geohash. If some were deleted it removes them from its own database ("DB"), also removing any cached content. If some were modified (their own ETags changed), then it removes any cached data belonging to them.

Publish is performed by the server typically weekly or fortnightly, and when it is done, not all files will changes, such as by way of hotspots name changes or location changes If only hotspots and/or SSIDs have been modified, added or deleted, then only the following will change:
- master geohash - always changes if any of the sub-content (SSID or HS files) changes,
- Only relevant SSID files will change for those that have had SSIDs or hotspots added or removed,
- SSID files will be added or removed where the number of hotspots added or removed causes them to be broken down further or amalgamated

The process for when a user looks at a map and wants to see pins for specific hotspots is the same, the client downloading HS files which provide this user information. However, the HS files are indexed by a separate list of files of hotspots known to be in the area (with data such as the street address, longitude-latitude coordinates) rather than by geohashes.

### Device Software Client Operating Method, More Detail

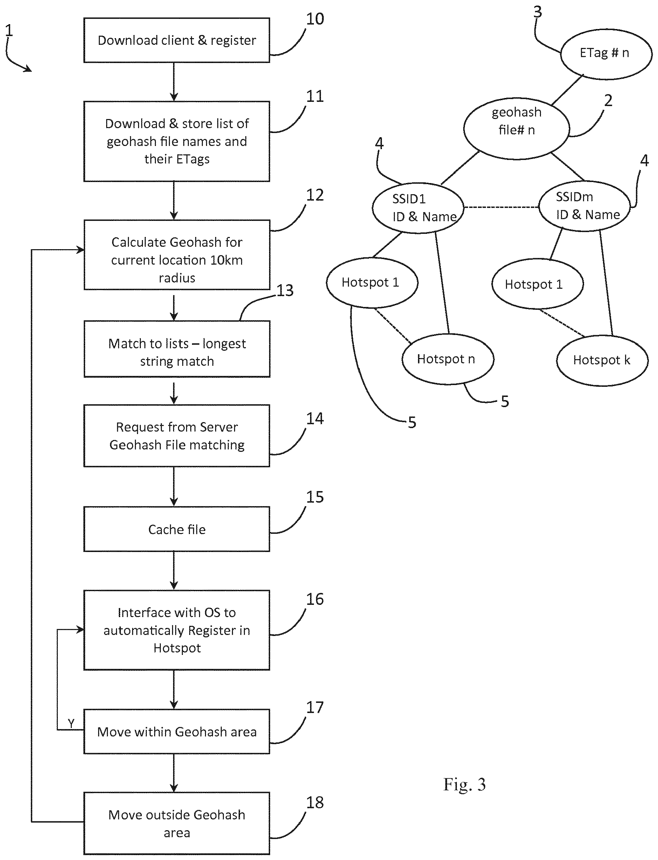

Referring to Fig. 3, an SSID (or "geohash") file 2 has an associated ETag 3. Each SSID file 2 contains *m* SSIDs 4, and each SSID is related to *n* hotspots 5. A method 1 executed by the digital processor of a client device according to client software is illustrated with steps 10 to 18.

In step 10 the device downloads the software client and registers with the server. To commence, the client downloads and stores on the device in step 11a list of SSID file names and their ETags. These are as represented on the right hand side of the diagram. Each SSID file 2 contains a set of SSIDs 4 in a geographic area and access credentials. Each SSID 4 is associated with a number of hotspots 5 for that SSID location and these are stored in related tables. However, the HS data is stored on separate but related files.

The ETag is a hash (not geohash) over the file content. It is an identifier based on the content of the SSID file. If the content changes at the server and a new ETag is generated at the server, it will be different from the previous ETag. If the client has the list of ETags for the files it has in memory, and the server's list has different ETags for some files, then the client can tell that some of the files it has stored are out of date and either purge them or update them as required. So, in order to know if some SSID files have changed, the client only needs to pull the list of ETags, not the full files.

The client in step 12 automatically calculates a geohash for a configured radius, in this case 10km. Although a geohash is normally used to reference a point, there is an inherent 'fuzziness' to the accuracy. The longer the geohash, the more accurate the representation of the point. We take advantage of that fuzziness by using a shorter geohash to represent areas (or 'boxes'). For example, a geohash of length 5 has an error margin of plus or minus 0.022 degrees (approx. 2.4 km) for the point it represents. Therefore a geohash of length 5 could also be said to represent a geographic area 0.022 degrees north, south, east and west of a point.

In step 13 the client matches the calculated geohash to its stored list. The matching algorithm finds the longest matching geohashes. The matching operation allows the client to request from the server in step 14 a particular set of SSID files which match, which the client can identify directly. There is no need for a client-server dialogue for determining the file identifier.

The SSID files contain some header information with:
the ETag,
the file type,
a list of column names

The rest of the SSID file is CSV with values corresponding to the columns.

An example is as follows, with the variables separated by commas (a sequence of commas is where there is no data):

```
    f77519cda25cffa57f53531044e2b4bd (ETag)
    ssid (type of information)
    ssid_id,ssid,hidden,authtype,password,routing_prefix,realm,hotspot_category,ua,ignore_
    wisp_in_redirect (CSY format, columns of data to follow)
    1,World Wifi Network,0,0,,,,0,,
    2, Y5ZONE,0,0,,,,0,,
    4,AKIWIFI,0,0,,,,0,,
    5,quickspot,0,0,,,,0,,
    6,Intemet,0,0,,,,0,,
    7,GOWEX FREE WiFi,0,0,,,,0,,
    8,_The Cloud,0,0,,,,0,,
```

When processing the file, the client reads the SSID and access credentials that might be associated with that SSID and stores it in the local DB.

When the client receives scan results from the OS it compares the connected SSID and decides if it is responsible for authenticating the user on it. If so, it will attempt authentication.

The client may need to choose one credential over another, or apply routing information to the login process, using the device location to determine the preference of one over another. In order to determine the correct credentials the client performs a lookup of the ssid_routing_rules for the connected SSID and processes them in order of priority. If there is a region specified in the rule, the client will check that its location is within that region. If not, it will ignore this rule.

If the routing rule is ok, then the client software will look up the corresponding ssid_routing record to get information required to perform a login. It will use data such as the routing_prefix, realm to inform the username to use when performing a captive portal login.

If the login is not successful, then the client moves to the next ssid_routing_rule in the ordered list and attempts a login using that.

For example, in one country, it may prefer to use a particular Wi-Fi aggregator for a given SSID, while in another country it may prefer a different Wi-Fi aggregator for that same SSID.

Having determined an ordered list of credentials and routes, the client attempts authentication in that order.

Depending on the capabilities of the OS, the client may also check other SSIDs available in the scan list and decide to instruct the OS to prefer those other SSIDs, causing the connection to drop and be established on the other SSID

The downloaded file is cached in step 15.

In step 16 the client interfaces with the device's OS to automatically register in the relevant hotspot. Step 16 is repeated for each successive hotspot within the same geohash area.

If the device moves a larger distance, outside of the geohash area, the method loops back to step 12.

It will be appreciated that the invention provides in a client/server architecture the ability to know how geographic points of interest are distributed across the globe, without it having to preload all SSID points (to conserve memory on client device, or the server having to process geographic queries from every client (to conserve CPU on server).

For each SSID file, the following is provided:
- A unique identifier
- Geographic Latitude (e.g. degrees ranging from -90 to +90)
- Geographic Longitude (e.g. degreed ranging from -180 to +180)

The following may also be included in the HS files downloaded from the server.):
- A business name (e.g. a coffee shop name)
- A street address, postcode, etc.
- A phone number
- A website URL

In some embodiments these are not downloaded if such information is deemed not necessary. However it would be required if presenting the specific hotspot on the map (for example, if the user taps a pin). So, in most cases the information is not needed.

The download of SSID files may be on a specific user request such as by RESTful queries on individual hotspots, for example.

The SSID files store flags indicating behaviour at that SSID. Examples are given above for the ETag f77519cda25cffa57f53531044e2b4bd. These may include:
- Whether it is safe to ignore digital certificates for HTTPS connections
- The HTTP User-Agent to use when performing a login

At some point in time an administrator or a timed process will perform a 'publish'. This publish converts the data about hotspots stored in the server's database into a format suitable for hosting via static files.

The publish process uses the following logic to publish an SSID file and a HS file:

```
 void function write_file_with_etag(filename, data)
 {
    create temporary file and write header information and data in
    CSV format
    calculate an etag of temporary file using MD5 hash of file
    contents
    open filename for writing
    write etag to filename
    copy contents of temporary file to filename
    close filename
    delete temporary file
    }
    void function write_geohash(data,
                                  latitude_geohash_bitstring,
                                  longitude_geohash_bitstring)
             {
    generate geohash_filename from latitude_geohash_bitstring
                            and longitude_geohash_bitstring
    calculate unused bits in last full character of geohash_filename
    concatenate digit representing unused bits to geohash_filename
    write_file_with_etag(geohash_filename, data)
     store geohash_filename, its type (hotspot or SSID) and etag
             in local database
             }
             void function partition_data
             (latitude_geohash_bitstring, longitude_geohash_bitstring, data)
             {
    convert latitude geohash_bitstring to real latitude_min,
    latitude_max
    convert longitude geohash_bitstring to real longitude_min,
    longitude_max
    compile data within bounds of latitude_min, longitude_min and
            latitude_max, longitude_max into data_within_bounds
    if length of latitude_geohash_bitstring > defined limit
     {
            write_geohash(data_within_bounds,
                           latitude_geohash_bitstring,
                           longitude_geohash_bitstring)
     }
    else
             {
            if count of items in data_within_bounds
             {
                   if len(latitude_geohash_bitstring) <
                            len(longitude_geohash_bitstring)
             {
                           partition_data(latitude_geohash_bitstring + "0",
                                    longitude_geohash_bitstring,
                                    data_within_bounds)
                           partition_data(latitude_geohash_bitstring + "1",
                                    longitude_geohash_bitstring,
                                    data_within_bounds)
                    }
                   else
             {
                           partition_data(latitude_geohash_bitstring,
                                    longitude_geohash_bitstring + "0",
                                    data_within_bounds)
                           partition_data(latitude_geohash_bitstring,
                                    longitude_geohash_bitstring + "1",
                                    data_within_bounds)
                    }
            }
            else
             {
                   write_geohash(data_within_bounds,
                                  latitude_geohash_bitstring,
                                  longitude_geohash_bitstring)
            }
     }
     }
     void main()
     {
    compile a list_of_hotspots of interest by performing a search on
    its database
    partition_data("0", "0", list_of_hotspots)
    partition_data("1", "0", list_of_hotspots)
    partition_data("0", "1", list_of_hotspots)
    partition_data("1", "1", list_of_hotspots)
    compile a list_of_ssids of interest by performing a search on its
    database
    partition_data("0", "0", list_of_ssids)
    partition_data("1", "0", list_of_ssids)
    partition_data("0", "1", list_of_ssids)
    partition_data("1", "1", list_of_ssids)
    read each geohash_filename, its filetype and etag from its local
    database
    generate a list of filename, filetype and etags in CSV format
    write_file_with_etag(master_filename, list)
    }
```

Hence the publish process may be summarized as:
Generate a geohash, in which unused bits are represented by a digit,
Compile data within bounds of the geohash, including hotspots of interest to the region identified by the geohash and SSIDs of interest.
If the data is too big, break it into smaller areas (longer geohashes)
Write the data to a file using the geohash as the name
Calculate an ETag of the file based on an MD5 hash of its contents.

At the end of the publish process, the server will have a master file with and an ETag for the master file. The master file will contain references to SSID files and HS files of SSIDs, each with their own ETags.

Each file will be available on disk and accessible via a web server.

The following is additional information relating to the geohash files. The 'partner' file ssid_info also references the handling and routing objects in the same way that the 'free/open/ ssid_info_box files do.

As described above SSIDs are partitioned using geohashes, the server publishing an SSID file which contains only partner SSIDs (which must be known to the software client at all times) and a set of files under a 'ssidbox' directory (indexed by geohash).

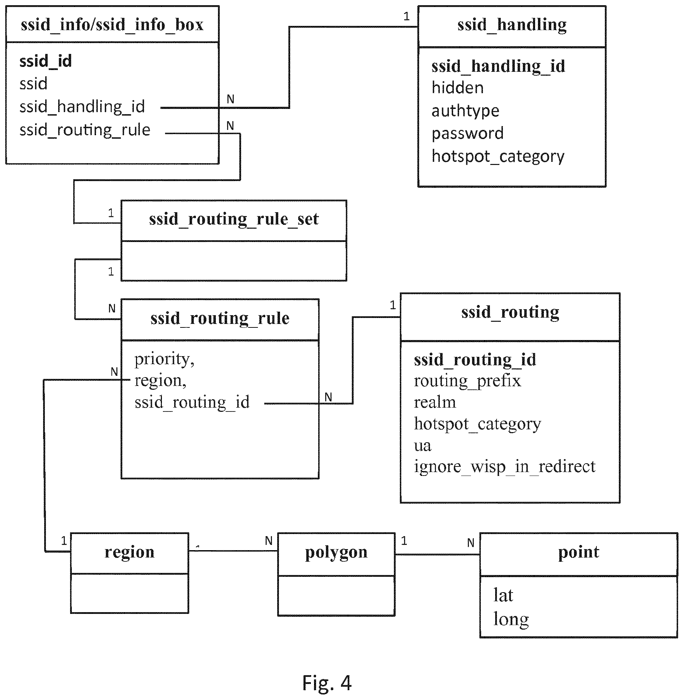

The same principle applies in an alternative structure, illustrated in Fig. 4. There is an "ssid_info/ssid_info_box" file with several attributes as illustrated including an "ssid_handling_id" attribute linked to an SSID handling object and an "ssid_routing_rule" attribute linked with an ssid_routing_rule object. The latter is in turn linked with an "ssid_routing" object with a set of routing information, and a region attribute is linked to a region object containing N polygon file objects, in turn containing N point file objects.

The ssid_handling_object is for radio-level information including the password and other access credentials for associating to a hotspot. The ssid_routing_rule object is for authentication server level captive portal parameter information including identification of the server which is used for authentication, and parameters for access such as time duration and allocated bandwidth allowed for access.

The "ssid_info" file is for partner SSIDs and the "ssid_info_box" directory is for geohashed entries. Although it is unlikely that the ssid_routing_rule objects will be populated in the files under the ssid_info_box directory, the option to include it is maintained in case this geohashed data is applied to more than one free and open hotspot - i.e. if the amount of partner SSIDs becomes too big for one file.

In one example, the "ssid_info" file points to the "ssid_handling" object. However, the routing-specific information is not in the "ssid_handling" object. Rather, the "ssid_info" file can refer to 0 or more "ssid_routing" entries via the illustrated links to the ssid_routing_rule_set and the ssid_routing rule. Examples are:

```
    'ssid_info' file:
    a3ed9568f8908908e55588f71b55ed39
    ssid_info
    ssid_id,ssid,ssid_handling_id,ssid_routing_rule
     1,World Wifi Network,1,
    2,Y5ZONE,1,
     ......
    678,Wendy's Wi-Fi,2,6
    679,Boingo Hotspot,2,6
    New 'ssid_handling' file:
    b9866f625cfebba4373a5400fc93d183
    ssid_handling
    ssid_handling_id,hidden,authtype,password,hotspoCcategory
     1,0,0,0
    2,0,2,passwd,0
```

In one embodiment, there is a separate directory which contains rule files named by its rule number and contains one or more rules, ordered by a priority field. The rules are applied in order of descending priority - i.e. highest priority first.

An empty region means that the client software applies the ssid_routing regardless of location. This can be used by the server to specify default handling of an SSID e.g.:

```
    ssid_routing_rule/6:
    357cc5f992d9605290af6bf3749d6a65
    ssid_routing_rule
    priority,region,ssid_routing
    2,100,11
     1,101,11
    0,,12
```

This rule may be associated with arouting file such as:

```
New 'ssid_routing' file:
 0070d73834f637aalebe5cfa2ffff86e
 ssid_routing
 ssid_routing_id,routing_prefix,realm,ua,ignore_wisp_in_redirect
 10,,,,0,,
 11,,aggregator1/,@aggregator_realm1,aggregator_user_agent1,
 12,,AGGREGATOR2/,,,
```

A directory contains regions for which each file is named by its region number and contains one or more polygons. A polygon is a JSON array of points. A point is a JSON array of 2 floats - [latitude, longitude]. To facilitate CSV parsing, the polygons will be quoted. An example is:

```
    region/100:
    357cc5f992d9605290af6bf3749d6a65
    region
    polygon
    "[[42.152492,9.560016],[41.380007,9.229752],[41.583612,8.775723],[42.256517,8.5442
     13],[42.628122,8.746009],[43.009985,9.390001],[42.152492,9.560016]] "
    "[[50.378992,3.588184],[49.907497,4.286023],[49.985373,4.799222],[49.529484,5.6740
    52],[49.442667,5.897759],[49.463803,6.18632],[49.201958,6.65823],[49.017784,8.0992
    79],[48.333019,7.593676],[47.620582,7.466759],[47.449766,7.192202],[47.541801,6.73
    6571],[47.287708,6.768714],[46.725779,6.037389],[46.27299,6.022609],[46.429673,6.5
    001],[45.991147,6.843593],[45.70858,6.802355],[45.333099,7.096652],[45.028518,6.74
    9955],[44.254767,7.007562],[44.127901,7.549596],[43.693845,7.435185],[43.128892,6.
    529245],[43.399651,4.556963],[43.075201,3.100411],[42.473015,2.985999],[42.343385,
     1.826793],[42.795734,0.701591],[42.579546,0.338047],[43.034014,-
     1.502771],[43.422802,-1.901351],[44.02261,-1.384225],[46.014918,-
     1.193798],[47.064363,-2.225724],[47.570327,-2.963276],[47.954954,-
    4.491555],[48.68416,-4.59235],[48.901692,-3.295814],[48.644421,-
     1.616511],[49.776342,-1.933494],[49.347376,-
    0.989469],[50.127173,1.338761],[50.946606,1.639001],[51.148506,2.513573],[50.79684
    8,2.658422],[50.780363,3.123252],[50.378992,3.588184]]"
```

In above example there are two polygons. An entire polygon may be provided on each line of the file, for example

### Finding matches

When the device software client decides that it needs to authenticate, it will look up the ssid_routing_rule for the ssid in question. If there is no ssid_routing_rule, then the default realm is used and authentication proceeds as normal. If there is an ssid_routing_rule, then the list of regions/ssid_routing for the rule is retrieved ordered be descending priority.

For each region/ssid_routing tuple:

```
  If the region is empty:
      Apply the ssid_routing;
      Break;
  Else:
      Get location of the device (see below);
      Test if the device is in the region;
      If in region:
            Apply the ssid_routing;
            Break;
  If no matching region was found, then use the default realm
```

### What Location to Use

If the device can provide location information to the app, then this should be used when applying the rules. Only rough location is required.

If the device cannot provide location at that time, then the last known location is used.

If there is no last known location, then no region search is performed

### Retries

If the WISPr login fails with a WISPr 100 error (Login failed - Access Reject), then this may be an indication of incorrect routing being used, as opposed to any underlying transport issue.

In this case, then next rule (if any) should be applied, eventually defaulting to using the default realm.

An implication is that the client must remember where it was in the list of regions while doing the WISPr login.

The invention is not limited to the embodiments described but may be varied in construction and detail.

## Claims

1. A method performed by a mobile device having a processor and a radiation communication interface, and a server having a processor and a database, the method comprising steps of:
the device storing (11) a list of names of SSID files (2) stored in the server, each SSID file having hotspot SSIDs and associated access credentials,
the device automatically determining (12) current location,
the device associating (13) the current location with an SSID file name or names,
in which the device calculates (12) a geohash for the current location, and the location is identified by the geohash, and the geohash has a level of granularity which sets a region size,
the device requesting (14) the server to download the SSID file or files for said name or names, and
using access credentials from said SSID file or files for automatically logging (16) into a relevant hotspot.

2. A method as claimed in claim 1, wherein each file (2) has an associated tag (3), and if the file contents change the tag is changed.

3. A method as claimed in claim 2, wherein the tag (3) is a hash over the associated file (2) content.

4. A method as claimed in claims 2 or 3, wherein the device processor automatically determines file changes by comparing tags stored locally and tags on the server.

5. A method as claimed in any preceding claim, wherein the device processor scans currently available hotspot SSIDs and compares them to SSIDs in the files available on the server, and each SSID file represents a set of SSIDs, and includes a tag, a file type, and a list of variables, and the variables include at least one selected from authentication type, password, routing prefix, hotspot category, and user agent.

6. A method as claimed in any preceding claim, wherein the SSID files (2) are generated on the server by a publishing process, and wherein SSIDs are partitioned using geohashes, the server publishing an SSID file (2) which contains only partner SSIDs which are known to the device, and a set of files under a directory indexed by geohash).

7. A method as claimed in claim 6, wherein said publishing comprises steps performed by the server of:
generating a geohash, in which unused bits are represented by a digit,
compiling data within bounds of the geohash, including hotspots of interest to the region identified by the geohash and SSIDs of interest,
if the data is too big, break it into smaller areas with longer geohashes,
writing the data to a file using the geohash as the name, and
calculating a tag of the file based on an MD5 hash of its contents.

8. A method as claimed in any preceding claim, wherein the device processor associates the current location by searching a list of known geohashes for the determined geohash using a query, and:
if not found, shortening the query by removing one or more last characters and
repeating the search, and
if a match is found then the matching geohash contains the area, and the processor
retrieves the SSID file matching that geohash, and
wherein the device processor periodically checks a tag with tags of a master list on the server, and if it detects a change it determines that a new publish has been performed and so potentially a distribution of geohashes has changed, and it checks for new geohashes and stores them locally.

9. A method as claimed in any preceding claim, wherein the device processor removes geohashes and any associated files if said files have changed, and wherein the device processor automatically generates a list of hotspots for the current location, and wherein the hotspots are determined from a file downloaded from the server.

10. A method as claimed in any preceding claim, wherein the device processor:
stores (10) a list of names of hotspot files, each file having hotspot data including location,
automatically determines current location,
associates the current location with a hotspot file name or names, and
requests the server to download the hotspot file for said name or names; and
wherein the device processor calculates (12) a geohash for the current location, in which the location is identified by a geohash with a chosen level of granularity to set the area size, and wherein:
each hotspot file has an associated tag, and if the file contents change the tag is changed,
the tag is a hash over the associated hotspot file content, and
the device automatically determines hotspot file changes by comparing tags stored locally and tags on the server; and
wherein the device processor reads said location information in the hotspot file and uses it to generate a display for a user indicating geographical location of a hotspot and user-readable information concerning the hotspot.

11. A method as claimed in any preceding claim, wherein at least one SSID file (2) has a structure with attributes linking a parent file to a handling object and to a routing object, in which the handling object includes radio-level parameters including credentials for use by the device software to associate to a hotspot, and the routing object includes authentication server-level captive portal parameters including priority parameters including time duration for access and allocated bandwidth, and optionally said routing object is linked in a chain to a region object, in turn linked to a polygon object defining the region in terms of latitude and longitude geographical points.

12. A method as claimed in any preceding claim, wherein the software client applies an order to a plurality of potential access credentials and attempts access in that order.

13. A method as claimed in claim 12, wherein said access credentials are derived from different SSIDs in a single SSID file or multiple SSID files.

14. A client device comprising a processor and a radiation communication interface, in which the processor is configured to perform the device steps of a method as claimed in any preceding claim.

15. A computer readable medium comprising non-transitory software for performing the steps of a method of any of claims 1 to 13 when executed by a digital processor.

## Patentansprüche

1. Verfahren, durchgeführt von einem Mobilgerät mit einem Prozessor und einer Strahlungskommunikationsschnittstelle, und einem Server mit einem Prozessor und einer Datenbank, wobei das Verfahren die folgenden Schritte beinhaltet:
Speichern (11), durch das Gerät, einer Liste von Namen von im Server gespeicherten SSID-Dateien (2), wobei jede SSID-Datei Hotspot-SSIDs und assoziierte Anmeldedaten beinhaltet,
automatisches Bestimmen (12), durch das Gerät, des aktuellen Orts,
Assoziieren (13), durch das Gerät, des aktuellen Orts mit einem oder mehreren SSID-Dateinamen, wobei das Gerät einen Geohash für den aktuellen Ort berechnet (12) und der Ort durch den Geohash identifiziert wird und der Geohash ein Granularitätsniveau hat, das eine Regionsgröße festlegt,
Auffordern (14), durch das Gerät, des Servers, die ein oder mehreren SSID-Dateien für die genannten ein oder mehreren Namen herunterzuladen, und
Benutzen von Anmeldedaten aus den genannten ein oder mehreren SSID-Dateien zum automatischen Einloggen (16) in einen relevanten Hotspot.

2. Verfahren nach Anspruch 1, wobei jede Datei (2) einen assoziierten Tag (3) hat und der Tag geändert wird, wenn sich der Datei inhalt ändert.

3. Verfahren nach Anspruch 2, wobei der Tag (3) ein Hash über den Inhalt der assoziierten Datei (2) ist.

4. Verfahren nach Anspruch 2 oder 3, wobei der Geräteprozessor Dateiänderungen durch Vergleichen von lokal gespeicherten Tags und Tags auf dem Server automatisch bestimmt.

5. Verfahren nach einem vorherigen Anspruch, wobei der Geräteprozessor aktuell verfügbare Hotspot-SSIDs scannt und sie mit SSIDs in den auf dem Server verfügbaren Dateien vergleicht und jede SSID-Datei einen Satz von SSIDs repräsentiert und einen Tag, einen Dateityp und eine Liste von Variablen beinhaltet, und die Variablen wenigstens eine beinhalten, die aus Authentifizierungstyp, Passwort, Routing-Präfix, Hotspot-Kategorie und User-Agent ausgewählt ist.

6. Verfahren nach einem vorherigen Anspruch, wobei die SSID-Dateien (2) auf dem Server durch einen Veröffentlichungsprozess erzeugt werden und wobei SSIDs mit Geohashes partitioniert werden, wobei der Server eine SSID-Datei (2) veröffentlicht, die nur Partner-SSIDs enthält, die dem Gerät bekannt sind, und einen Satz von Dateien unter einem durch Geohash indexierten Verzeichnis.

7. Verfahren nach Anspruch 6, wobei die genannte Veröffentlichung die folgenden vom Server durchgeführten Schritte beinhaltet:
Erzeugen eines Geohash, in dem unbenutzte Bits durch eine Stelle repräsentiert werden,
Kompilieren von Daten innerhalb von Grenzen des Geohash einschließlich Hotspots von Interesse für die durch den Geohash identifizierte Region und SSIDs von Interesse,
Untergliedern, wenn die Daten zu groß sind, in kleinere Bereiche mit längeren Geohashes,
Schreiben der Daten auf eine Datei mit dem Geohash als Namen, und
Berechnen eines Tag der Datei auf der Basis eines MD5-Hash ihres Inhalts.

8. Verfahren nach einem vorherigen Anspruch, wobei der Geräteprozessor den aktuellen Ort durch Durchsuchen einer Liste von bekannten Geohashes nach dem bestimmten Geohash anhand einer Abfrage assoziiert, und
wenn keine Übereinstimmung gefunden wird, die Abfrage durch Entfernen von einem oder mehreren letzten Zeichen und Wiederholen der Suche verkürzt wird, und
wenn eine Übereinstimmung gefunden wird, der passende Geohash den Bereich enthält und der Prozessor die mit diesem Geohash übereinstimmende SSID-Datei abruft, und
wobei der Geräteprozessor periodisch einen Tag mit Tags einer Master-Liste auf dem Server prüft und, wenn er eine Änderung erkennt, feststellt, dass eine neue Veröffentlichung durchgeführt wird und sich somit potentiell eine Verteilung von Geohashes geändert hat, und nach neuen Geohashes prüft und sie lokal speichert.

9. Verfahren nach einem vorherigen Anspruch, wobei der Geräteprozessor Geohashes und eventuelle assoziierte Dateien entfernt, wenn sich die genannten Dateien geändert haben, und wobei der Geräteprozessor automatisch eine Liste von Hotspots für den aktuellen Ort erzeugt, und wobei die Hotspots anhand einer von dem Server heruntergeladenen Datei bestimmt werden.

10. Verfahren nach einem vorherigen Anspruch, wobei der Geräteprozessor:
eine Liste von Namen von Hotspot-Dateien speichert (10), wobei jede Datei Hotspot-Daten einschließlich des Orts hat,
den aktuellen Ort automatisch bestimmt,
den aktuellen Ort mit einem oder mehreren Hotspot-Dateinamen assoziiert, und
den Server auffordert, die Hotspot-Datei für die genannten ein oder mehreren Namen herunterzuladen; und
wobei der Geräteprozessor einen Geohash für den aktuellen Ort berechnet (12), in dem der Ort durch einen Geohash mit einem gewählten Granularitätsniveau identifiziert wird, um die Bereichsgröße festzulegen, und wobei:
jede Hotspot-Datei einen assoziierten Tag hat und der Tag geändert wird, wenn sich der Dateiinhalt ändert,
der Tag ein Hash über den assoziierten Hotspot-Dateiinhalt ist, und
das Gerät automatisch Hotspot-Dateiänderungen durch Vergleichen von lokal gespeicherten Tags und Tags auf dem Server bestimmt; und
wobei der Geräteprozessor die genannten Ortsinformationen in der Hotspot-Datei liest und sie zum Erzeugen einer Anzeige für einen Benutzer benutzt, die den geografischen Ort eines Hotspot und benutzerlesbare Informationen über den Hotspot anzeigt.

11. Verfahren nach einem vorherigen Anspruch, wobei wenigstens eine SSID-Datei (2) eine Struktur mit Attributen hat, die eine Stammdatei mit einem Handling-Objekt und einem Routing-Objekt verknüpft, wobei das Handling-Objekt Parameter auf Radioniveau einschließlich Anmeldedaten zur Verwendung durch die Gerätesoftware zum Assoziieren mit einem Hotspot beinhaltet und das Routing-Objekt Captive Portal Parameter auf Authentifizierungsserverlevel mit Prioritätsparametem einschließlich Zeitdauer für Zugriff und zugeordnete Bandbreite beinhaltet, und wobei optional das genannte Routing-Objekt in einer Kette zu einem Regionsobjekt verknüpft ist, wiederum verknüpft mit einem Polygon-Objekt, das die Region im Hinblick auf geografische Breiten- und Längengradpunkte definiert.

12. Verfahren nach einem vorherigen Anspruch, wobei der Software-Client eine Reihenfolge auf mehrere potentielle Anmeldedaten anwendet und versucht, in dieser Reihenfolge zuzugreifen.

13. Verfahren nach Anspruch 12, wobei die genannten Anmeldedaten von unterschiedlichen SSIDs in einer einzelnen SSID-Datei oder in mehreren SSID-Dateien abgeleitet werden.

14. Client-Gerät, das einen Prozessor und eine Strahlungskommunikationsschnittstelle umfasst, wobei der Prozessor zum Durchführen der Geräteschritte eines Verfahrens nach einem vorherigen Anspruch konfiguriert ist.

15. Computerlesbares Medium, das nichtflüchtige Software zum Durchführen der Schritte eines Verfahrens nach einem der Ansprüche 1 bis 13 bei Ausführung durch einen digitalen Prozessor umfasst.

## Revendications

1. Un procédé exécuté par un dispositif mobile possédant un processeur et une interface de communication par rayonnement, et un serveur possédant un processeur et une base de données, le procédé comprenant les opérations suivantes :
la conservation en mémoire (11) par le dispositif d'une liste de noms de fichiers SSID (2) conservés en mémoire dans le serveur, chaque fichier SSID possédant des SSID de point d'accès sans fil et des identifiants d'accès associés,
la détermination automatique (12) par le dispositif d'un emplacement actuel,
l'association (13) par le dispositif de l'emplacement actuel à un nom ou des noms de fichiers SSID, où le dispositif calcule (12) un hachage géographique pour l'emplacement actuel, et l'emplacement est identifié par le hachage géographique, et le hachage géographique possède un niveau de granularité qui définit une taille de zone,
la demande (14) par le dispositif adressée au serveur de télécharger le fichier ou les fichiers SSID pour ledit nom ou lesdits noms, et
l'utilisation d'identifiants d'accès provenant dudit fichier ou desdits fichiers SSID pour une connexion automatique (16) à un point d'accès sans fil pertinent.

2. Un procédé selon la Revendication 1, où chaque fichier (2) possède une balise associée (3), et si les contenus de fichier sont modifiés, la balise est modifiée.

3. Un procédé selon la Revendication 2, où la balise (3) est un hachage sur le contenu du fichier associé (2).

4. Un procédé selon les Revendications 2 ou 3, où le processeur de dispositif détermine automatiquement des modifications de fichier par la comparaison de balises conservées en mémoire localement et de balises sur le serveur.

5. Un procédé selon l'une quelconque des Revendications précédentes, où le processeur de dispositif balaie des SSID de point d'accès sans fil actuellement disponibles et les compare à des SSID dans les fichiers disponibles sur le serveur, et chaque fichier SSID représente un ensemble de SSID, et comprend une balise, un type de fichier et une liste de variables, et les variables comprennent au moins un élément sélectionné parmi type d'authentification, mot de passe, préfixe de routage, catégorie de point d'accès sans fil et agent utilisateur.

6. Un procédé selon l'une quelconque des Revendications précédentes, où les fichiers SSID (2) sont générés sur le serveur par un procédé de publication, et où les SSID sont partitionnés au moyen de hachages géographiques, le serveur publiant un fichier SSID (2) qui contient uniquement des SSID partenaires qui sont connus du dispositif et un ensemble de fichiers sous un répertoire indexé par un hachage géographique.

7. Un procédé selon la Revendication 6, où ladite publication comprend les opérations suivantes exécutées par le serveur :
la génération d'un hachage géographique, dans lequel des bits non utilisés sont représentés par un chiffre,
la compilation de données à l'intérieur de limites du hachage géographique, comprenant des points d'accès sans fil d'intérêt pour la zone identifiée par le hachage géographique et des SSID d'intérêt,
si les données sont trop volumineuses, la division de celles-ci en zones plus petites avec des hachages géographiques plus longs,
l'écriture des données vers un fichier au moyen du hachage géographique en tant que nom, et
le calcul d'une balise du fichier en fonction d'un hachage MD5 de ses contenus.

8. Un procédé selon l'une quelconque des Revendications précédentes, où le processeur de dispositif associe l'emplacement actuel par le parcours d'une liste de hachages géographiques connus à la recherche du hachage géographique déterminé au moyen d'une requête, et :
s'il n'est pas trouvé, le raccourcissement de la requête par la suppression d'un ou de plusieurs derniers caractères et la répétition de la recherche, et
si un appariement est trouvé, alors le hachage géographique apparié contient la zone, et le processeur récupère le fichier SSID apparié à ce hachage géographique, et
où le processeur de dispositif vérifie périodiquement une balise avec des balises d'une liste maître sur le serveur, et s'il détecte une modification, il détermine qu'une nouvelle publication a été exécutée et ainsi que potentiellement une distribution de hachages géographiques a été modifiée, et il recherche de nouveaux hachages géographiques et les conserve en mémoire localement.

9. Un procédé selon l'une quelconque des Revendications précédentes, où le processeur de dispositif supprime des hachages géographiques et tous fichiers associés si lesdits fichiers ont été modifiés, et où le processeur de dispositif génère automatiquement une liste de points d'accès sans fil pour l'emplacement actuel, et où les points d'accès sans fil sont déterminés à partir d'un fichier téléchargé à partir du serveur.

10. Un procédé selon l'une quelconque des Revendications précédentes, où le processeur de dispositif :
conserve en mémoire (10) une liste de noms de fichiers de point d'accès sans fil, chaque fichier possédant des données de point d'accès sans fil comprenant un emplacement,
détermine automatiquement un emplacement actuel,
associe l'emplacement actuel à un nom ou des noms de fichier de point d'accès sans fil, et
demande au serveur de télécharger le fichier de point d'accès sans fil pour ledit nom ou lesdits noms, et
où le processeur de dispositif calcule (12) un hachage géographique pour l'emplacement actuel, dans lequel l'emplacement est identifié par un hachage géographique avec un niveau de granularité choisi de façon à définir la taille de zone, et où :
chaque fichier de point d'accès sans fil possède une balise associée, et si les contenus de fichier sont modifiés, la balise est modifiée,
la balise est un hachage sur le contenu de fichier de point d'accès sans fil associé, et
le dispositif détermine automatiquement des modifications de fichier de point d'accès sans fil par la comparaison de balises conservées en
mémoire localement et de balises sur le serveur, et
où le processeur de dispositif lit lesdites informations d'emplacement dans le fichier de point d'accès sans fil et les utilise de façon à générer un affichage destiné à un utilisateur indiquant un emplacement géographique d'un point d'accès sans fil et des informations lisibles par un utilisateur concernant le point d'accès sans fil.

11. Un procédé selon l'une quelconque des Revendications précédentes, où au moins un fichier SSID (2) possède un structure avec des attributs reliant un fichier parent à un objet de gestion et à un objet de routage, dans lequel l'objet de gestion comprend des paramètres de niveau radio comprenant des identifiants destinés à une utilisation par le logiciel de dispositif à associer à un point d'accès sans fil, et l'objet de routage comprend des paramètres de portail captifs de niveau serveur d'authentification comprenant des paramètres de priorité comprenant une durée d'accès et une bande passante attribuée, et éventuellement ledit objet de routage est relié dans une chaîne à un objet de zone, à son tour relié à un objet polygonal définissant la zone en termes de points géographiques de latitude et de longitude.

12. Un procédé selon l'une quelconque des Revendications précédentes, où le logiciel client applique un ordre à une pluralité d'identifiants d'accès potentiels et tente d'accéder dans cet ordre.

13. Un procédé selon la Revendication 12, où lesdits identifiants d'accès sont dérivés de SSID différents dans un fichier SSID unique ou une pluralité de fichiers SSID.

14. Un dispositif client comprenant un processeur et une interface de communication par rayonnement, dans lequel le processeur est configuré de façon à exécuter les opérations de dispositif d'un procédé selon l'une quelconque des Revendications précédentes.

15. Un support lisible par ordinateur contenant un logiciel non transitoire destiné à l'exécution des opérations d'un procédé selon l'une quelconque des Revendications 1 à 13 lorsqu'il est exécuté par un processeur numérique.
